(19) Europäisches Patentamt
European Patent Office
Office européen des brevets

(11) EP 3 673 003 B1

(12) FASCICULE DE BREVET EUROPEEN

(45) Date de publication et mention de la délivrance du brevet:
**08.12.2021 Bulletin 2021/49**

(21) Numéro de dépôt: **18800237.2**

(22) Date de dépôt: **09.10.2018**

(51) Int Cl.:
***C08G 64/30*** *(2006.01)* ***C08G 64/18*** *(2006.01)*

(86) Numéro de dépôt international:
**PCT/FR2018/052502**

(87) Numéro de publication internationale:
**WO 2019/077230 (25.04.2019 Gazette 2019/17)**

(54) **POLYMERES MULTIBLOCS DONT LA SYNTHESE MET EN OEUVRE D'OLIGOCARBONATES POLYOLS**

MIT OLIGOCARBONATPOLYOLEN SYNTHETISIERTE MULTIBLOCKPOLYMERE

MULTIBLOCK POLYMERS SYNTHESISED USING OLIGOCARBONATE POLYOLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2017 FR 1759693**

(43) Date de publication de la demande:
**01.07.2020 Bulletin 2020/27**

(73) Titulaire: **Roquette Frères**
**62136 Lestrem (FR)**

(72) Inventeurs:
- **CORPART, Jean-Marc**
**59130 Lambersart (FR)**
- **SAINT-LOUP, René**
**59160 Lomme (FR)**

(74) Mandataire: **Plasseraud IP**
**66, rue de la Chaussée d'Antin**
**75440 Paris Cedex 09 (FR)**

(56) Documents cités:
**EP-A1- 2 036 937** **EP-A1- 2 840 102**
**US-A1- 2014 031 516** **US-A1- 2014 031 517**

- **OCHOA-GOMEZ ET AL: "Synthesis of isosorbide bis(methyl carbonate) by transesterification of isosorbide with dimethyl carbonate, and evidence of its usefulness as a monomer for manufacturing polycarbonates", ARABIAN JOURNAL OF CHEMISTRY, 25 septembre 2016 (2016-09-25), XP002782101, DOI: 10.1016/j.arabjc.2016.09.017**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 673 003 B1

## Description

La présente invention concerne des polymères multiblocs dont la synthèse met en œuvre de nouveaux oligocarbonates polyols, obtenus par réaction entre un dialkylcarbonate de dianhydrohexitol et/ou un dimère de carbonate de dianhydrohexitol et un autre diol et/ou triol, dans des conditions particulières de réaction et notamment de quantités relatives des espèces mises en jeu.

Elle présente en l'avantage de mettre en œuvre un dianhydrohexitol, dont l'origine bio-sourcée diminue l'empreinte fossile du produit fabriqué, de ne pas utiliser de phosgène ni de générer de phénol comme beaucoup de solutions antérieures, ces deux produits étant dangereux pour l'utilisateur mais aussi proscrits pour toute application avec contact alimentaire, de conduire à des produits à l'architecture contrôlée, et enfin de permettre avec ces produits la fabrication de revêtements particulièrement résistants à l'abrasion, aux rayures et aux UV.

Les poly- ou oligocarbonates diols sont des espèces aujourd'hui bien connues, et qui trouvent de nombreuses applications dans la fabrication d'adhésifs mais aussi de revêtements divers comme les peintures, les laques et les vernis. Une de leurs applications bien connue est la fabrication de revêtements de type résines polyuréthanes. Au même titre que des composants éthers (polytetraméthylèneglycol), esters (à partir d'adipate notamment), polylactone (base polycaprolactone entre autres), les polycarbonates diols constituent une des matières premières de départ de ces résines polyuréthanes.

Si les éthers présentent une bonne résistance à l'hydrolyse, ils le sont moins vis-à-vis de la lumière et de la chaleur. Les esters présentent un comportement diamétralement opposé à l'égard de ces mêmes propriétés. Quant aux polycaprolactones, ils sont également déficients au regard des phénomènes d'hydrolyse. Il est de ce fait reconnu que les polycarbonates diols présentent à ce jour le meilleur compromis en vue d'obtenir une qualité durable pour le produit final, en termes de résistance à l'hydrolyse, à la chaleur et à la lumière. Ceci est particulièrement important pour un revêtement de type polyuréthane, notamment dans des applications comme les peintures extérieures qui sont justement exposées aux contraintes précitées.

La fabrication de matériaux de type polyuréthane à base de polycarbonates polyols est aujourd'hui bien décrite dans la littérature. A titre d'exemple, le document WO 2015/026613 décrit un joint-piston pour une pompe hydraulique, ledit joint étant de type polyuréthane et obtenu par réaction entre un prépolymère polycarbonate-isocyanate, un polycarbonate-polyol, un diol et un agent durcisseur.

Quant aux oligocarbonates diols, leur synthèse est également bien renseignée dans l'art antérieur. Ces produits sont préparés à partir de polyols aliphatiques qui réagissent avec du phosgène, des esters bischlorocarboniques, des diaryl carbonates, ces carbonates cycliques ou encore des dialkyl carbonates. On pourra à cet égard se reporter au document US 2005 065360.

Ceci étant, tout en cherchant à garantir un excellent niveau de performances aux poly- ou oligocarbonates diols qu'il fabrique, l'homme du métier doit aujourd'hui intégrer de nouvelles contraintes notamment d'ordre environnemental. Le développement de matériaux polymères issus de ressources biologiques renouvelables à court terme est en effet devenu un impératif écologique et économique majeur, face à l'épuisement et à la montée des prix des ressources fossiles telles que le pétrole. Dans ce contexte, l'utilisation de dianhydrohexitols, issus de (poly)saccharides végétaux, en tant que monomères dihydroxylés dans des réactions de polycondensation, apparaît prometteuse pour remplacer des monomères d'origine pétrochimiques.

Quelques tentatives ont été réalisées en vue de fabriquer des polycarbonates diols incorporant des dianhydrohexitols. On connaît à ce titre les documents JP2014-62202 et JP 2014-80590. Le premier décrit une composition comprenant un composé phosphoré, un composé phénolique et un polycarbonate diol, ce dernier ayant une masse moléculaire moyenne en nombre comprise entre 250 et 5 000 et présentant un ratio molaire entre groupes hydroxy et groupements terminaux au moins égal à 95 %. Le second décrit un polycarbonate diol constitué d'un diol et d'un dianhydrohexitol choisi parmi l'isosorbide, l'isomannide et l'isoidide, et présentant une masse moléculaire moyenne en poids comprise entre 250 et 5 000 comme déterminée par RMN, tout en ayant un ratio en nombre de groupements terminaux alkyloxy ou aryloxy par rapport au nombre total de groupes terminaux supérieur ou égal à 5 %.

Néanmoins, ces produits sont obtenus par réaction entre un diol et le dianhydrohexitol, mais également en présence de diphényl carbonate. Du phénol est donc généré au cours de la synthèse du polycarbonate diol. Or, le phénol est un produit à la fois dangereux pour l'utilisateur -tant au niveau du produit, que de l'application finale et proscrit pour des applications avec contact alimentaire. La présence de phénol est donc rédhibitoire : il doit être distillé pour ensuite être éliminé. C'est bien ce que démontrent les essais illustrant les 2 demandes de brevet susmentionnées.

On connaît également le document EP 2 559 718 qui décrit la réaction simultanée entre un diol choisi entre l'isosorbide, l'isomannide et l'isoidide, un autre diol, et un carbonate de diester, tel que le diphényl carbonate. On obtient donc ici un polycarbonate diol, mais avec une architecture complètement statistique car le carbonate de diester étant très réactif, il réagit sans préférence à la fois avec le dianhydrohexitol et l'autre diol. Les propriétés finales du produit, telles que ses résistances à l'hydrolyse, à la lumière et à la chaleur étant directement reliées à son architecture, ledit polycarbonate diol va présenter des propriétés fluctuantes en fonction de son architecture finale. Cet absence de contrôle

du niveau des propriétés ne peut s'accommoder d'un usage industriel pour le produit en question.

Aussi, en vue de fabriquer des oligocarbonates polyols mettant avantageusement en œuvre un monomère d'origine naturelle comme un dianhydrohexitol et ce, sans mettre en œuvre du phosgène et sans génération de phénol pendant la réaction, et enfin tout en s'autorisant à réguler l'architecture du produit synthétisé, la société demanderesse est parvenue à mettre au point le procédé suivant, consistant à faire réagir un dialkylcarbonate de dianhydrohexitol et/ou un dimère de carbonate de dianhydrohexitol avec un autre diol et/ou triol, pour obtenir des oligocarbonates polyols présentant une architecture alternée parfaitement contrôlable et contrôlée. Un excès molaire de l'autre diol et/ou triol par rapport au dialkylcarbonate de dianhydrohexitol et/ou un dimère de carbonate de dianhydrohexitol permet d'obtenir des terminaisons hydroxyles.

Ce faisant, on parvient ainsi à résoudre les contraintes techniques évoquées plus haut. Qui plus est, on obtient au final des polycarbonates diol, susceptibles d'être utilisés dans la fabrication d'adhésifs, de revêtements divers comme des peintures, des laques et des vernis. Ces oligocarbonates polyols peuvent notamment être utilisés pour fabriquer des résines polyuréthanes, aux propriétés particulièrement intéressantes, en termes de résistance à l'abrasion, aux rayures et aux UV.

De manière avantageuse, les dialkycarbonates d'isosorbide qui entrent en jeu dans la réaction sont fabriquées selon la méthode décrite dans la demande de brevet WO 2011/039483. Celle-ci consiste à faire réagir au moins un dianhydrohexitol, au moins 2 équivalents en moles d'un carbonate de di(alkyle) et un catalyseur de transestérification. A la différence des procédés décrits dans l'art antérieur, cette méthode ne génère pas de composés nocifs pour l'homme ou dangereux pour l'environnement. Ainsi la demande de brevet EP 2 033 981 décrivait une synthèse dont l'inconvénient était la formation de phénol, qui devait ensuite être distillé et éliminé en tant que sous-produit de réaction. Quant aux documents US 2004/241553 et JP 06-261774, ils reposaient sur l'utilisation d'esters chloroformiques toxiques. EP-A-2840102 décrit la préparation de copolymères blocs de polycarbonate-polyester en utilisant un précurseur d'oligomère de polycarbonate qui contient l'isosorbide.

## Résumé

Aussi, selon un premier aspect, la présente invention concerne un procédé de fabrication d'un polymère multibloc présentant un bloc polycarbonate comprenant :

- une étape (1) d'introduction, dans un réacteur :
  - d'un monomère de formule (A1):

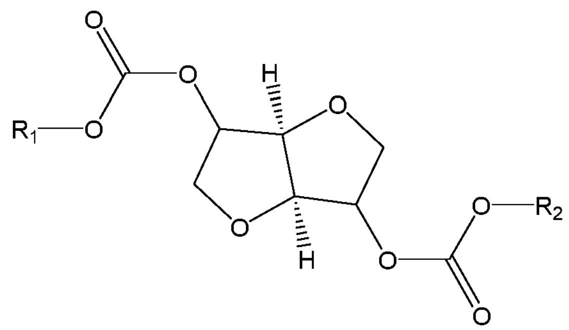

(A1)

dans laquelle $R_1$ et $R_2$ sont des groupements alkyle identiques ou différents,
  - ou d'un dimère de formule (A2) :

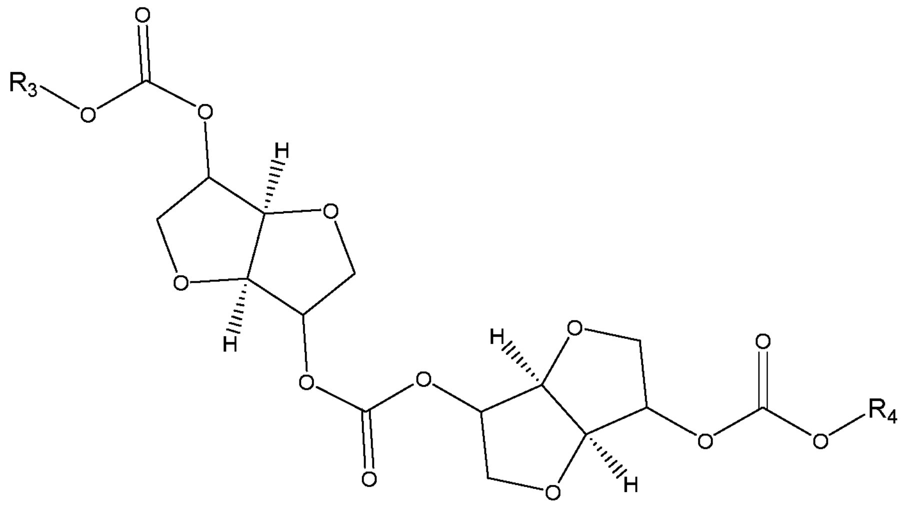

(A2)

dans laquelle $R_3$ et $R_4$ sont des groupements alkyle identiques ou différents,
o ou d'un mélange de (A1) et (A2);

- une étape (2) d'introduction, dans le réacteur, d'un monomère diol (B1) ou d'un monomère triol (B2) ou d'un mélange de (B1) et (B2), (B1) et (B2) étant tous deux différents de (A1) et (A2);
- le ratio molaire dans le réacteur de (A1) et (A2) par rapport à (B1) et (B2) répondant à la formule suivante :

$$\frac{[\frac{(A1)}{2} + \frac{(A2)}{2}]/}{[\frac{(B1)}{2} + \frac{(B2)}{3}]} < 1$$

,

- une étape (3) ultérieure de polycondensation par transestérification des monomères et dimères (A1), (A2), (B1) et (B2) pour obtenir un oligocarbonate polyol ayant une masse molaire inférieure à 5000 g/mol et au moins deux terminaisons de chaîne de type hydroxyle,

  - une étape (4) de récupération de l'oligocarbonate polyol.
  - une étape (5) de réaction de l'oligocarbonate polyol avec

  Soit :

    - un ou plusieurs diacides choisis parmi les diacides aromatiques ou aliphatiques, et avec
    - un ou plusieurs composés choisis parmi des diols ou des diamines.

  Soit

    - un ou plusieurs oligoéthers diol, et avec
    - un ou plusieurs agents de couplage.

L'étape (5) peut donc être une étape de réaction de l'oligocarbonate polyol avec un ou plusieurs diacides choisis parmi les diacides aromatiques ou aliphatiques, et avec une ou plusieurs diamine(s) de façon à former un poly (amide-b-carbonate).

Alternativement, l'étape (5) peut être une étape de réaction de l'oligocarbonate polyol avec

- un ou plusieurs oligoéthers diol, et avec
- un ou plusieurs agents de couplage.

de façon à former un poly (éther-*b*-carbonate).

Enfin, l'étape (5) peut être une étape de réaction de l'oligocarbonate polyol avec un ou plusieurs diacides choisis parmi les diacides aromatiques ou aliphatiques, et avec un ou plusieurs diol(s), de façon à former un poly (ester-b-carbonate).

Selon un deuxième aspect, l'invention concerne un polymère multibloc présentant un bloc polycarbonate susceptible d'être obtenu par le procédé selon l'invention.

Description détaillée

Par « oligocarbonate polyol », on entend tout polymère comprenant des motifs répétitifs, formés par la réaction de monomères ou dimères, liés par des liaisons carbonate et en particulier les motifs répétitifs décrits ci-dessus et dont les terminaisons de chaîne sont des fonctions hydroxyles. Ces motifs répétitifs sont formés par réaction du monomère (A1) et/ou du dimère (A2) avec les monomères (B1) et/ou (B2) déjà présentés ci-dessus.

Au sens de la présente invention, l'expression « un monomère » s'étend aux mélanges de ce monomère. En d'autres termes, l'expression « un monomère (A1) » ou « un monomère de formule (A1) » signifie qu'un seul monomère de formule (A1) est utilisé ou bien qu'un mélange de différents monomères de formule (A1) est utilisé. Une signification analogue est donnée aux expressions « un monomère (A2) » ou « un dimère de formule (A2) », « un monomère (B1) » ou « un monomère de formule (B1) », ou encore « un monomère (B2) » ou « un monomère de formule (B2) ».

Comme expliqué précédemment, l'invention concerne un procédé de fabrication d'oligocarbonates hydroxytéléchéliques par polycondensation du monomère (A1) et/ou du dimère (A2) et des monomères (B1) et/ou (B2).

Le terme « 1,4 : 3,6-dianhydrohexitol » ou « dianhydrohexitol », utilisé dans la présente invention, englobe l'isosorbide (obtenu par déshydratation du D-glucitol), l'isomannide (obtenu par déshydratation du D-mannitol) et l'isoidide (obtenu par déshydratation du D-iditol).

Par « dimère de carbonate de dianhydrohexitol » selon la présente invention, on entend un composé de formule (A2), c'est-à-dire constitué de deux molécules de monoalkylcarbonate de dianhydrohexitol reliées entre elles par une fonction carbonate bivalente. Le composé comprend donc au total deux terminaisons carbonates.

Monomères (A1) et (A2)

Le monomère (A1) utilisé à l'étape (1) peut être choisi parmi le dialkylcarbonate d'isosorbide, le dialkylcarbonate d'isomannide et le dialkylcarbonate d'isoidide.

Le monomère (A1) peut contenir un ou plusieurs dialkylcarbonates de dianhydrohexitol mais contient de préférence un seul dialkylcarbonate de dianhydrohexitol, en particulier un dialkylcarbonate d'isosorbide, disponible en plus grande quantité et à plus faible coût que les deux autres stéréoisomères.

Les groupements alkyle $R_1$ et $R_2$ portés par le monomère (A1) peuvent comprendre de 1 à 10 atomes de carbones, en particulier de 1 à 6 atomes de carbone, par exemple de 1 à 4 atomes de carbone, tout particulièrement sont choisis parmi les groupements méthyle ou éthyle.

Selon un mode de réalisation, le monomère (A1) est un dialkylcarbonate d'isosorbide, en particulier un diéthylcarbonate d'isosorbide ou un diméthylcarbonate d'isosorbide.

Le monomère (A1) peut être obtenu en utilisant par exemple les procédés déjà connus de fabrication de dialkylcarbonate de dianhydrohexitol.

Avantageusement, le monomère (A1) est préparé selon le procédé décrit dans la demande de brevet WO 2011/039483 (au nom de Roquette Frères) en faisant réagir un dianhydrohexitol avec au moins 2 équivalents en moles d'un carbonate de di(alkyle) et un catalyseur de transestérification. La formation de dimères peut être inhibée par l'utilisation d'un excès important de carbonate de dialkyle. Cette méthode présente l'avantage de ne pas générer de composés nocifs pour l'homme ou dangereux pour l'environnement.

On peut aussi fabriquer le monomère (A1) par réaction de dianhydrohexitol et de chloroformiate d'alkyle, ces réactifs étant introduits dans un réacteur dans des proportions molaires de 1 : 2. Ce type de procédé est décrit par exemple dans le document JP 06-261774 à l'exemple 5. La Demanderesse a pu constater que, selon ce procédé, on ne forme que du dialkylcarbonate de dianhydrohexitol et aucun dimère.

Le dimère (A2) utilisé à l'étape (1) est un dimère de (A1). Selon le dianhydrohexitol utilisé, on peut obtenir une ou plusieurs conformations de dimères (A2).

Le dimère (A2) peut être choisi parmi un dimère de carbonate d'isosorbide, un dimère de carbonate d'isomannide ou un dimère de carbonate d'isoidide.

Le dimère (A2) peut contenir un ou plusieurs dimères de carbonate de dianhydrohexitol mais contient de préférence un seul dimère de carbonate de dianhydrohexitol, en particulier un dimère de carbonate d'isosorbide, disponible en plus grande quantité et à plus faible coût que les deux autres stéréoisomères.

Les groupements alkyle $R_3$ et $R_4$ portés par le dimère (A2) peuvent comprendre de 1 à 10 atomes de carbones, en particulier de 1 à 6 atomes de carbone, par exemple de 1 à 4 atomes de carbone, tout particulièrement sont choisis

parmi les groupements méthyle ou éthyle.

Selon un mode de réalisation, le dimère (A2) est un dimère de carbonate d'isosorbide, en particulier un dimère d'éthylcarbonate d'isosorbide ou un dimère de méthylcarbonate d'isosorbide.

On peut fabriquer le dimère (A2) en faisant réagir par exemple dans une première étape une mole de dianhydrohexitol avec une mole de chloroformiate d'alkyle afin de former du monoalkylecarbonate de dianhydrohexitol, puis dans une seconde étape une mole de phosgène avec deux moles du monoalkylecarbonate de dianhydrohexitol formé lors de la première étape.

Une autre possibilité de fabriquer le monomère (A1) et le dimère (A2) est d'utiliser un procédé permettant leur synthèse simultanée. En effet, la Demanderesse a également mis au point un procédé permettant de fabriquer un tel mélange. Ce procédé est décrit en détail dans la demande internationale n° WO2011/039483.

Ce procédé de préparation comprend, dans l'ordre, les étapes suivantes :

(a) préparation d'un mélange réactionnel initial contenant :

- au moins un dianhydrohexitol,
- au moins 2 équivalents en moles, rapportés à la quantité de dianhydrohexitol présent, d'au moins un carbonate de dialkyle, et
- un catalyseur de transestérification comme par exemple le carbonate de potassium,

(b) chauffage du mélange réactionnel jusqu'à une température supérieure ou égale à la température d'ébullition de l'alcool R-OH formé par la réaction de transestérification, ou supérieure ou égale à la température d'ébullition du mélange azéotropique que forme l'alcool R-OH obtenu avec un autre des composants présents dans le mélange réactionnel, et au plus égale à la température d'ébullition du mélange réactionnel, dans un réacteur muni d'une colonne de rectification comportant un nombre de plateaux théoriques de distillation suffisant pour séparer du mélange réactionnel l'alcool obtenu, ou l'azéotrope qu'il forme avec un autre des composants présents dans le mélange réactionnel.

La solution obtenue à la fin du procédé comprend un mélange de monomère (A1) et de dimère (A2) avec du carbonate de dialkyle. On réalise une distillation et on récupère le mélange de (A1) et (A2) exempt de carbonate de dialkyle. On peut faire varier le ratio (A1) / (A2) en modifiant le mélange réactionnel initial : celui-ci contient avantageusement de 2,1 à 100 équivalents molaires, de préférence de 5 à 60 équivalents molaires, et en particulier de 10 à 40 équivalents molaires de carbonate de dialkyle, rapportés à la quantité de dianhydrohexitol présent initialement dans le milieu réactionnel. Plus la quantité en carbonate de dialkyle est élevée, plus le ratio (A1) / (A2) est également élevé.

Par exemple, la Demanderesse a constaté qu'en faisant réagir de l'isosorbide et du carbonate de diméthyle en présence de carbonate de potassium dans les conditions du procédé décrit ci-dessus, on pouvait obtenir une solution comprenant (A1) et (A2) avec un ratio (A1) / (A2) allant d'environ 4 (lorsque le ratio carbonate de dialkyle /isosorbide est de 10) à environ 20 (lorsque le ratio carbonate de dialkyle /isosorbide est de 40).

On peut ensuite séparer (A1) et (A2) par des techniques de distillation sous vide, par exemple en utilisant un évaporateur à film raclé.

Ce procédé de synthèse simultanée de (A1) et (A2) présente les avantages d'utiliser des réactifs moins toxiques que le chloroformiate d'alkyle utilisé dans le procédé décrit dans le document JP 06-261774 par exemple ; les co-produits de synthèse sont également moins toxiques que les espèces chlorées émises lors de la synthèse avec du chloroformiate (méthanol dans le cas où l'alkyle est un méthyle, éthanol dans le cas où l'alkyle est un éthyle).

Selon un mode de réalisation, on synthétise seulement le monomère (A1). Seul celui-ci est introduit dans le réacteur à l'étape (1), c'est-à-dire qu'on n'introduit pas de dimère (A2) dans le réacteur.

Selon un autre mode de réalisation, on synthétise un mélange de monomère (A1) et de dimère (A2). Ce mélange est introduit dans le réacteur à l'étape (1).

Monomères (B1) et (B2)

Le monomère diol (B1) et le monomère triol (B2) peuvent être choisis parmi les diols ou triols aliphatiques, en particulier linéaires ou ramifiés, ou bien les diols ou triols cycliques, aromatiques ou non aromatiques.

Dans un mode de réalisation, le diol (B1) ou le triol (B2) comprennent de 2 à 14 carbones.

Le diol aliphatique linéaire (sans ramification) peut être choisi parmi les diols suivants : éthylène glycol, 1,3-propanediol, 1,4- butanediol, 1,5-pentanediol, 1,6-hexanediol, 1,8-octanediol, 1,10-decanediol, préférentiellement l'éthylène glycol, le 1,4-butanediol ou le 1,6-hexanediol.

Le triol aliphatique linéaire peut être choisi parmi les triols suivants : glycérol, le 1,2-4 trihydroxybutanol, 1,2-5 pentane diol ou le 1,2-6 hexanediol

Le diol aliphatique ramifié (avec des chaines pendantes non réactives) peut être choisi parmi les diols suivants : 1,2-propanediol, le 1,3-butanediol, le 2,3-butanediol le 1,3-pentanediol, le 1,4-hexanediol, 2,2-diméthyl-1,3-propanediol, 3-méthyl-1,5-pentanediol, 2,2-diméthyl-1,3-propanediol ou le 2-méthyl-1,3-propanediol.

Le diol ou triol cyclique peut comprendre un ou plusieurs cycles, par exemple de 2 à 4 cycles, préférentiellement 2 cycles. Chaque cycle comprend préférentiellement de 4 à 10 atomes. Les atomes compris dans les cycles peuvent être choisis parmi le carbone, l'oxygène, l'azote ou le soufre. Préférentiellement, les atomes constitutifs du cycle sont le carbone ou le carbone et l'oxygène.

Le diol aromatique comprend préférentiellement de 6 à 24 atomes de carbone.

Le diol cyclique non aromatique peut comprendre de 4 à 24 atomes de carbone, avantageusement de 6 à 20 atomes de carbone.

Le diol aliphatique cyclique peut être choisi en particulier parmi les diols suivants:

- les dianhydrohexitols tels que l'isosorbide, l'isomannide et l'isoidide (diols hétérocycliques biosourcés);
- les cyclohexanediméthanols tels que le 1,2-cyclohexanediméthanol, le 1,3-cyclohexanediméthanol, et le 1,4-cyclohexanediméthanol ;
- les tricyclodécanediméthanols ;
- les pentacyclopentanediméthanols ;
- les décalindiméthanols tels que le 2,6-décalindiméthanol, le 1,5-décalindiméthanol et le 2,3-décalindiméthanol ;
- les norbornanediméthanols tels que le 2,3-norbornanediméthanol et le 2,5-norbornanediméthanol ;
- les adamantanediméthanols tels que le 1,3-adamantanediméthanol ;
- les cyclohexanediols tels que le 1,2-cyclohexanediol, le 1,3-cyclohexanediol et le 1,4-cyclohexanediol ;
- les tricyclodécanediols ;
- les pentacyclopentadecanediols ;
- les décalindiols ;
- les norbornanediols ;
- les adamantanediols,
- le spiroglycol ;
- le 2,2,4,4-tétraméthyl-1,3-cyclobutanediol,

le Di-O-methylene-D-glucitol et le dimethyl -di-O-methylene-D-glucarateLe diol cyclique aromatique peut être choisi en particulier parmi les diols suivants:

1,4-Benzenedimethanol
Le 1.3 benzene dimethanol
Le 1,5 dimethanol,
Le 2,5 furane dimethanol
Le naphthalene-2 6-dicarboxylate

Le triol cyclique aromatique peut être choisi parmi les triols suivants : pyrogallol, hydroxyquinol, phloroglucinol.

Il est possible d'introduire selon le procédé de l'invention des monomères autres que (A1), (A2), (B1) et (B2).

On peut par exemple introduire des monomères comprenant plus de 2 fonctions alcool ou carbonate d'alkyle. On peut également introduire des monomères comprenant plusieurs fonctions choisies parmi la fonction acide carboxylique, ester d'acide carboxylique, aminé ou des mélanges de ces fonctions. On peut également introduire d'autres monomères tels que du monoalkylcarbonate de dianhydrohexitol, des oligomères de (A1) de degré de polymérisation supérieur ou égal à 3.

Il est également possible d'introduire d'autres produits ou encore d'autres produits tels que du dialkyléther de dianhydrohexitol, du monoalkyléther de dianhydrohexitol ou du monoalkyléther de dianhydrohexitol monoalkylcarbonate qui peuvent être des co-produits de synthèse de (A1) ou (A2) . Il est également possible d'introduire des agents de terminaison de chaîne, qui sont des composés ne comprenant qu'une seule fonction susceptible de réagir avec une fonction alcool ou carbonate.

Cependant, sur la totalité des monomères introduits dans le réacteur, on préfère que la somme de (A1), (A2), (B1) et (B2) constitue plus de 90% en moles de la totalité des monomères introduits, avantageusement plus de 95%, voire plus de 99%. Tout préférentiellement, les monomères introduits dans le réacteur sont essentiellement constitués de (A1), (A2), (B1) et (B2). Bien évidemment, on préfère limiter la quantité de carbonate de diaryle et de monomères halogénés introduits, par exemple à des quantités inférieures à 5% du nombre total de moles de monomères introduites. Dans un mode de réalisation particulièrement préféré, on n'introduit aucun monomère choisi parmi les carbonates de diaryle et les monomères halogénés.

Ratio molaire de (A1) et (A2) par rapport à (B1) et (B2)

Le ratio molaire dans le réacteur de (A1) et (A2) par rapport à (B1) et (B2) répond à la formule suivante :

$$\frac{[\frac{(A1)}{2} + \frac{(A2)}{2}]/}{[\frac{(B1)}{2} + \frac{(B2)}{3}]} < 1$$

Avantageusement, le ratio molaire dans le réacteur de (A1) et (A2) par rapport à (B1) et (B2) tel que défini ci-dessus est strictement inférieur à 1 et supérieur à 0,5, en particulier strictement inférieur à 1 et supérieur à 0,7, plus particulièrement strictement inférieur à 1 et supérieur à 0,9.

Le choix tout particulier de cette molarité et donc cet excès en l'autre diol (B1) et/ou triol (B2) conduit à des oligocarbonates polyols présentant une fonction hydroxyle à chaque bout de chaîne, ce qui les rend utiles pour la préparations de polymères, tels que des polyuréthanes.

Plus le ratio est faible et plus la masse molaire de l'oligocarbonate obtenu est faible.

L'ordre des étapes d'introduction (1) et (2) n'a pas d'importance. On peut réaliser l'étape (1) avant l'étape (2) ou vice versa. On peut également réaliser ces deux étapes simultanément. Selon une variante, on réalise un prémélange de (A1) et/ou (A2) et (B1) et/ou (B2) avant de les introduire dans le réacteur. Lorsque l'on utilise le dimère (A2) dans le procédé, on peut l'introduire en mélange avec (A1). Ce mélange peut être par exemple fait directement selon le procédé de synthèse décrit dans la demande internationale n° WO 2012/136942. Dans le cas où on introduit des mélanges de monomères ou dimères, la quantité de chacun de ces monomères peut être déterminée par des méthodes chromatographiques, comme par exemple la Chromatographie en Phase Gazeuse (CPG).

Par exemple, pour déterminer les quantités en (A1) et (A2) d'un mélange, on peut mesurer les quantités de chacun des constituants par CPG en faisant l'analyse sous forme de dérivés triméthylsilylés.

L'échantillon peut être préparé selon la méthode suivante: dans un bêcher, peser 500 mg d'échantillon et 50 mg de glucose pentaacétate (étalon interne) de pureté connue. Ajouter 50 ml de pyridine et laisser agiter jusqu'à dissolution complète. Reprendre 1 ml dans un godet, ajouter 0,5 ml de bis-(triméthylsilyl)-trifluoroacétamide puis chauffer 40 minutes à 70°C.

Pour réaliser le chromatogramme, on peut utiliser un chromatographe VARIAN 3800 muni :

- d'une colonne DB1 d'une longueur de 30 m et de 0,32 mm de diamètre avec une épaisseur de film de 0,25 pm,
- d'un injecteur de type 1177 équipé d'un focus liner avec laine de verre et chauffé à 300°C en utilisant un rapport de split de 30, le débit d'hélium étant de 1,7 mL/min,
- d'un détecteur FID chauffé à une température de 300°C réglé avec une sensibilité de $10^{-11}$.

On peut introduire, en mode split, 1,2 μL de l'échantillon dans le chromatographe, la colonne étant chauffée de 100°C jusqu'à 320°C avec une rampe de 7°C/min puis un palier de 15 min à 320°C. Dans ces conditions d'analyse, lorsque (A1) est un diméthylcarbonate d'isosorbide et (A2) des dimères de (A1), (A1) a un temps de rétention relatif d'environ 0,74, (A2) a un temps de rétention relatif allant d'environ 1,34 à 1,79, l'étalon interne ayant un temps de rétention d'environ 15,5 minutes.

A l'aide du chromatogramme, on peut calculer le pourcentage massique de chacun des constituants en déterminant la surface des pics correspondants et en calculant, pour chaque constituant, le rapport de la surface du pic lui correspondant sur la surface totale de l'ensemble des pics (à l'exception du pic de l'étalon interne).

Réaction de polycondensation par transestérification

Pour permettre la formation du polycarbonate selon le procédé de l'invention, le monomère (A1) et/ ou le dimère (A2) réagit avec le monomère (B1) et/ou (B2) par une réaction de transestérification, cette réaction étant conduite dans un réacteur.

Cette réaction peut se faire en l'absence de catalyseur. Cependant, la présence d'un catalyseur approprié permet d'accélérer la réaction et/ou d'augmenter le degré de polymérisation du polycarbonate ainsi formé pendant l'étape (3).

Le type et les conditions de transestérification condensation de l'étape (3) ne sont pas particulièrement limités.

Cependant, l'étape (3) se fait avantageusement en présence d'un catalyseur connu de polycondensation par

transestérification, avantageusement un catalyseur comprenant au moins un ion de métal alcalin ou de métal alcalino-terreux, un ion ammonium quaternaire, un ion phosphonium quaternaire, un composé azoté cyclique, un composé basique à base de bore ou un composé basique à base de phosphore.

A titre d'exemple de catalyseur comprenant au moins un ion de métal alcalin, on peut citer les sels de césium, de lithium, de potassium ou de sodium. Ces sels peuvent être en particulier des carbonates, des hydroxydes, des acétates, des stéarates, des borohydrures, des borures, des phosphates, des alcoolates ou des phénolates ainsi que leurs dérivés.

Comme catalyseur comprenant au moins un ion de métal alcalino-terreux, on peut citer les sels de calcium, de baryum, de magnésium ou de strontium. Ces sels peuvent être en particulier des carbonates, des hydroxydes, des acétates ou des stéarates ainsi que leurs dérivés.

En ce qui concerne les composés basiques à base de bore, il s'agit préférentiellement de sels de dérivés alkyliques ou phényliques de bore tels que le tétraphényle de bore.

Les catalyseurs comprenant des composés basiques à base de phosphore peuvent être des phosphines. Les catalyseurs comprenant un ion ammonium quaternaire sont préférentiellement des hydroxydes tels que l'hydroxyde de tetraméthylammonium.

Les catalyseurs comprenant un composé azoté cyclique sont préférentiellement des dérivés triazole, tetrazole, pyrrole, pyrimidine, pyrazine, pyridazine, picoline, piperidine, pyridine, aminoquinoléine ou imidazole.

Préférentiellement, le catalyseur est choisi parmi les catalyseurs comprenant au moins un ion de métal alcalin, les catalyseurs comprenant un composé azoté cyclique et les catalyseurs comprenant un ion ammonium quaternaire, tels que le carbonate de césium, les triazoles, l'hydroxyde de tetraméthylammonium, tout préférentiellement le carbonate de césium.

La quantité molaire de catalyseur éventuel, par rapport à la quantité de (A1) et (A2) va avantageusement de 10-7% à 1%, préférentiellement de 10-4% à 0,5%. Sa quantité peut être réglée en fonction du catalyseur utilisé. A titre d'exemple, on utilise préférentiellement de $10^{-3}$ à $10^{-1}$% de catalyseur comprenant au moins un ion de métal alcalin.

On peut éventuellement ajouter à (A1) et/ou (A2) et (B1) et/ou (B2) des additifs tels que les stabilisants.

Le stabilisant peut être par exemple un composé à base d'acide phosphorique tel que les phosphates de trialkyle, à base d'acide phosphoreux tels que les dérivés phosphites ou phosphates, ou un sel de ces acides par exemple les sels de zinc ; ce stabilisant permet de limiter la coloration du polymère durant sa fabrication. Son usage peut être avantageux en particulier lorsqu'on réalise la polycondensation à l'état fondu. Cependant, la quantité d'agent stabilisant est généralement inférieure à 0,01% du nombre total de moles de (A1), (A2), (B1) et (B2). Dans le procédé de fabrication de polycarbonate selon l'invention, on réalise l'étape de polycondensation de (A1) et/ou (A2) et (B1) et/ou (B2) lors de l'étape (3). Le type et les conditions de polymérisation ne sont pas particulièrement limités. On peut réaliser cette réaction à l'état fondu, c'est-à-dire en chauffant le milieu réactionnel en l'absence de solvant. On peut également réaliser cette polymérisation en présence de solvant. On réalise de préférence cette réaction à l'état fondu.

L'étape (3) est réalisée pendant un temps suffisant pour obtenir un polycarbonate. Avantageusement, la durée de l'étape (3) va de 1 heure à 24 heures, par exemple de 2 à 12 heures.

Au moins une partie de l'étape (3) du procédé selon l'invention peut être réalisée à une température allant de 100°C à 250°C, préférentiellement de 150 à 235°C. Préférentiellement, le réacteur est thermorégulé durant l'étape (3) à une température allant de 100°C à 250°C, préférentiellement de 150°C à 235°C.

Il est possible de conduire l'ensemble de l'étape (3) en isotherme. Cependant, on préfère généralement augmenter la température durant cette étape, soit par paliers de température, soit en utilisant une rampe de température. Cette augmentation de température durant l'étape (3) permet d'améliorer le degré d'avancement de la réaction de polycondensation par transestérification et d'augmenter ainsi la masse moléculaire du polycarbonate finalement obtenu, celui-ci présentant de plus une coloration plus faible que lorsque l'on réalise l'ensemble de l'étape (3) du procédé à sa température la plus haute.

On préfère bien entendu réaliser l'étape (3) sous atmosphère inerte, par exemple sous azote.

Pour éliminer les alcools générés lors du procédé selon l'invention, le vide dans le réacteur n'est pas nécessaire car on peut distiller les alcools générés plus aisément que le phénol. Le procédé selon l'invention présente ainsi l'avantage que l'étape de polycondensation par transestérification ne se fait pas nécessairement sous vide important. Ainsi, selon une variante du procédé de l'invention, au moins une partie de l'étape (3) est réalisée à une pression allant de 30 kPa à 110kPa, avantageusement de 50 à 105 kPa, préférentiellement de 90 à 105 kPa, par exemple à pression atmosphérique. Préférentiellement, au moins la moitié de la durée totale de l'étape (3) est réalisée à cette pression.

On peut cependant réaliser l'étape (3), pendant toute la durée ou pendant une partie sous vide un peu plus poussé, par exemple avec une pression à l'intérieur du réacteur comprise entre 100 Pa et 20 kPa. Bien évidemment, ce vide est réglé selon la température à l'intérieur du réacteur et le degré de polymérisation : lorsque le degré de polymérisation est bas, en cas de pression trop faible et de température trop élevée, la réaction ne peut pas se faire correctement car les monomères sont extraits du réacteur par distillation. Cette étape de vide un peu plus poussé peut être réalisée en fin de réaction, ce qui permet de plus d'éliminer une partie des espèces résiduelles.

Le réacteur est généralement équipé d'un moyen d'élimination des alcools générés au cours de la réaction de polycondensation par transestérification, par exemple une tête de distillation reliée à un condenseur.

Le réacteur est généralement équipé d'un moyen d'agitation tel qu'un système d'agitation à pales.

Le monomère (A1) et/ou le dimère (A2) présentent l'avantage de réagir de manière alternée avec les monomères (B1) et/ou (B2) durant l'étape (3). La réaction conduit ainsi à un oligomère ayant une architecture alternée.

Il est possible de réaliser une ou plusieurs étapes d'introductions supplémentaires de monomères (B1) et/ou (B2), ceci après le démarrage de l'étape de transestérification condensation (3).

On peut réaliser le procédé de façon discontinue (par « batch »), de façon continue, ou de façon semi-continue semi-discontinue.

On récupère l'oligocarbonate formé lors du procédé lors de l'étape (4). Il est possible d'effectuer une purification du produit ainsi obtenu dans une étape ultérieure à l'étape (4), par exemple par dissolution du produit dans un solvant tel que le chloroforme puis précipitation par ajout d'un non solvant tel que le méthanol.

Grâce au procédé de l'invention, on peut obtenir un rendement massique à l'issu de l'étape (4), défini par le rapport de la masse d'oligocarbonate récupérée sur la masse de la somme des monomères ou dimères mis en œuvre, supérieur ou égal à 60%, avantageusement supérieur à 70%, de préférence supérieur à 80%.

Avantageusement, l'oligocarbonate selon l'invention comprend un taux de phénol inférieur à 50 ppb.

Le taux de phénol résiduel est mesuré par chromatographie gazeuse sur un échantillon préalablement complètement hydrolysé par une hydrolyse acide. L'homme de l'art peut facilement effectuer l'hydrolyse acide des oligocarbonates et analyser le brut réactionnel par chromatographie gazeuse avec un étalon interne pour mesurer une réponse quantitative.

L'oligocarbonate polyol obtenu à l'issu de l'étape (4) du procédé selon l'invention présente une masse molaire inférieure à 5000 g/mol et des terminaisons de chaîne de type hydroxyle.

On peut diminuer, respectivement augmenter, la masse molaire de l'oligocarbonate en diminuant, respectivement augmentant, la quantité de monomères (B1) et/ (B2) mis en œuvre à l'étape (3) par rapport à celle de (A1) et/ ou (A2).

On peut diminuer, respectivement augmenter, le taux de ramification de l'oligocarbonate en diminuant, respectivement augmentant, la quantité de monomère (B2) mis en œuvre à l'étape (3) par rapport à celle de (B1).

Plus le taux de ramification de l'oligocarbonate sera élevé, plus la densité de réticulation du matériau polymérique obtenu à partir de cet oligomère sera élevée.

L'oligocarbonate polyol obtenu à l'issu de l'étape (4) du procédé selon l'invention présente par ailleurs un indice d'OH supérieur à 100 mg KOH/g.

L'étape (5) du procédé selon l'invention a pour objet la préparation d'un matériau polymérique caractérisé en ce que l'on fait réagir l'oligocarbonate polyol avec différents monomères pour obtenir des polymères de type multibloc ou polymère segmentés. En général, les polymères multiblocs ciblés sont

- poly (ester-b-carbonate) quand on fait réagir l'oligocarbonate avec des diols et des diacides
- poly(amide-b-carbonate) quand on fait réagir l'oligocarbonate avec des diamines et des diacides
- poly (ether-b-carbonate) quand on fait réagir les polyethers, des oligocarbonates et des agents de couplage de type diisocyanate ou diacide carboxylique par exemple.

Dans le cas des poly (ester-b-carbonates), on utilise de préférence une quantité molaire de diacide [D] équivalente à la quantité molaire de la somme d'oligocarbonate diol et d'un autre diol [E]
Les diacides [D] peuvent être choisis parmi l'acide téréphtalique, l'acide succinique, l'acide adipique, l'acide naphtalène dicarboxylique, l'acide furanique, l'acide maléique ou l'acide fumarique.

Ledit un ou plusieurs diols [E] peuvent notamment être choisis parmi : l'éthylène glycol, le 1,4 butane diol, le 1,6 hexane diol, le cyclohexane dimethanol, l'isosorbide.

Dans le cas des poly (amides-b-carbonates), on utilise de préférence une quantité molaire de diacide [D] équivalente à la quantité molaire de la somme d'oligocarbonate diol et d'une diamine [F]
Les diacides [D] peuvent être choisis parmi l'acide téréphtalique, l'acide succinique, l'acide adipique, l'acide naphtalène dicarboxylique, l'acide furanique, l'acide maléique ou l'acide fumarique.

Les diamines [F] peuvent être choisies parmi les diamines aromatiques ou aliphatiques, linéaire ou cycliques ou hétérocycliques et les diacides aliphatiques ou aromatiques. Elles peuventnotamment être choisise parmi les diamines suivantes: le 1,4 diamino butane (putrescine), le 1,5 diamino pentane (cadavérine) , le 1,6 diamino butane (luciférine), l'oxylylènediamine, la m-xylylènediamine, la p-xylylènediamine, la 4,4'-diaminobiphenyle ou la 1,8-diaminonaphtalène.

Dans le cas des poly (ether-b-carbonates), on utilise de préférence une quantité molaire d'agent de couplage de chaîne [G] équivalente à la quantité molaire de la somme d'oligocarbonate diol et d'un oligoéther diol [H]
Ledit un ou plusieurs composé(s) [G] susceptible(s) de réagir avec au moins deux fonctions hydroxyles peuvent notamment être choisis parmi les diacides suivants : l'acide téréphtalique, l'acide succinique, l'acide adipique, l'acide naphtalène dicarboxylique, l'acide furanique, l'acide maléique ou l'acide fumarique.
Le composé [G] peut également être un agent de couplage réactif avec les fonctions hydroxyles, de préférence un agent de couplage choisi parmi les composés comprenant deux fonctions isocyanate, isocyanurate, lactame, lactone, carbonate, époxy, oxazoline ou imide, lesdites fonctions pouvant être identiques ou différentes.
L'agent de couplage [G] peut être par exemple un diisocyanate, une bis caprolactame ou une bis oxazoline (comme la benzyl bis oxazline) ou un composé présentant deux fonctions epoxy.
L'oligoether diol peut être un poly oxyde d'éthylène hydroxytéléchélique, un poly oxyde de propylène hydroxytéléchélique, un poly oxyde de butylène hydroxytéléchélique, un oligoéther fluoré ou perfluoré hydroxytéléchélique (comme le Fomblin Z-DOL par exemple) ou un oligo ether chlorofluoré hydroxytéléchélique.
Le polymère selon l'invention peut avantageusement présenter une ségrégation de phase.
Des modes de réalisation vont maintenant être détaillés dans les exemples qui suivent. Il est précisé que ces exemples illustratifs ne limitent d'aucune façon la portée de la présente invention.

## Exemples

### Méthodes analytiques utilisés :

DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 280°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage. De même la détermination de l'enthalpie de fusion (aire sous la courbe) est réalisée au premier chauffage.

Chromatographie d'exclusion stérique

Concernant la Mn, elle est déterminée en Chromatographie d'exclusion stérique dans le THF en utilisant des étalons Polystyrène. L'échantillon est préparé par dissolution dans le THF à la concentration de 5mg/ml.

Détermination indice d'alcool

L'indice d'OH est déterminé par RMN du 1H via une technique de dérivatisation par ajout d'anhydride trifluoroacétique et de $\alpha,\alpha,\alpha$-trifluorotoluène comme étalon interne.
Pour cela, Solubiliser 10 mg d'oligocarbonate diol dans 0,6 mL de CDCl3 puis ajout de l'ATFA en excès zet ractions durant 24h. Ajout 10 $\mu$L de $\alpha,\alpha,\alpha$-trifluorotoluène (étalon interne) avant analyse par RMN 1H
Le taux de OH est déterminé en comparant les intégrations des pics entre 5,4 et 5,6 ppm (représentant les signaux des protons en a des OH dérivatisés ) à la somme des intégrales des pics entre 1.4 et 1.9 ppm et entre 4.05 et 4.15 ppm. L'homme de l'art peut facilement retrouver l'indice d'OH une fois

Résistance à l'impact

Charpy selon Méthode DIN EN ISO 179

Non entaille ; ISO 179/1eU
Entaillé : ISO 179/1eA

### Exemples de synthèse d'oligocarbonates selon l'invention

Le diméthylcarbonate d'isosorbide, utile au procédé de fabrication des oligomères diols de polycarbonate selon l'invention, est obtenu selon le protocole décrit ci-après.

Synthèse du dimethylcarbonate d'isosorbide (DMCI)

On introduit dans un réacteur d'une capacité de 20 litres, chauffé par un bain thermostaté à fluide caloporteur, muni d'un système d'agitation mécanique à pale, d'un système de contrôle de la température du milieu réactionnel et d'une colonne de rectification surmontée d'une tête de reflux, 800 g d'isosorbide (5,47 mol) puis 5362 g de carbonate de diméthyle (= 20 équivalents de carbonate de diméthyle) et 2266 g de carbonate de potassium. On chauffe le mélange réactionnel pendant une heure à reflux total, temps au bout duquel la température des vapeurs en tête de colonne atteint 64°C, avant de débuter l'élimination du méthanol formé. On maintient ensuite le chauffage du milieu réactionnel à une température comprise entre 68 °C et 75 °C pendant 13 heures, temps au bout duquel la température des vapeurs en tête de colonne atteint 90 °C et se stabilise à cette température (point d'ébullition du carbonate de diméthyle). C'est le signe que la réaction de transestérification est terminée et qu'il ne se forme plus de méthanol.

On distille sous vide poussé (<1mBar) une partie du produit obtenu selon la Synthèse 1 sur un évaporateur à film raclé en configuration « short patch ». L'évaporateur est chauffé à 140°C et le produit est introduit à 70°C avec un débit de 140 g/h.

Le distillat obtenu est un solide blanc contenant 100% en poids de diméthylcarbonate d'isosorbide et ne contient aucune trace de dimères.

Préparation d'oligocarbonates

On introduit, dans un réacteur d'une capacité de 200 ml, chauffé par un four céramique, muni d'un système d'agitation mécanique à pale, d'un système de contrôle de la température du milieu réactionnel, d'une tubulure d'introduction d'azote, d'une tête de distillation reliée à un condenseur et à un récipient pour recueillir les condensats, et d'un système de mise sous vide avec régulation, une quantité de diméthylcarbonate d'isosorbide (A1) et de diols (B1): isosorbide et hexane diol ou butane diol, avec les quantités exprimées dans le tableau 1 ci-dessous et du carbonate de césium. Le ratio molaire (A1) / (B1) est de 0,9 pour 1. La quantité de carbonate de césium est de 17,1 mg ($2.5 \times 10^{-4}$ mole).

On met l'installation sous atmosphère d'azote et on chauffe le milieu réactionnel par l'intermédiaire du fluide caloporteur. On monte progressivement la température à 65°C afin que le milieu réactionnel fondu soit homogène et on applique 5 cycles « vide (300 mbar) - azote (flux) » avant de poursuivre la montée en température.. La montée en température entre chaque palier se fait en 15 minutes. Un premier pallier a lieu à une température de 100°C sous un flux d'azote de 5 ml/min d'azote durant 2 heures. La température est par la suite amenée à 180°C en 15 minutes et un vide de 50 mbar est appliqué. Cette étape dure 3 heures.

Le produit est alors refroidi sous azote et coulé dans un pilulier quand la température avoisine les 60°C.

Les exemples 1 à 5 décrivent les synthèses et les propriétés des réactions où un seul diol B a été employé, la nature du diol B ayant été modifiée.

| Exemple | Nature du Diol (B) | Qté Diol B (g) | Qté DMCI (A) (q) | Tg (°C) | IOH (mg KH/g) | Mn (g/mol) | aspect |
|---|---|---|---|---|---|---|---|
| EX1 | Butane diol | 11,45 | 30 | -30 | 130 | 850 | liquide incolore |
| EX 2 | Hexane diol | 15,01 | 30 | -49 | 124 | 900 | liquide incolore |
| EX 3 | Cyclohexane dimethanol | 18,32 | 30 | 45 | 110 | 1000 | solide pateux |
| EX 4 | pentaerythritol | 17,3 | 30 | -8 | 105 | 1100 | liquide jaune clair |
| EX 5 | diethylene glycol | 13,48 | 30 | -37 | 128 | 850 | liquide incolore |

Les exemples 6 et 7 sont synthétisés à partir d'un diol (B) variable ainsi que d'un diol (C), l'isosorbide.

| | Nature diol B | qté Iso (diol C) (g) | Qté diol B (g) | qté DMCI (A) (g) | IOH (mg KOH/g) | Tg (°C) | Mn (g/mol) | aspect |
|---|---|---|---|---|---|---|---|---|
| EX 6 | 1,4 Butane diol | 4,64 | 11,26 | 30 | 125 | -15 | 800 | liquide incolore |
| EX 7 | 1,6 hexanediol | 4,64 | 8,58 | 30 | 137 | -35 | 1300 | liquide incolore |

**Exemples d'utilisation d'oligocarbonates selon l'invention**

Exemple 8: Synthèse de poly ester-b-carbonate base PBS

Dans un réacteur de 7,5L sont ajoutés 1458 g de 1,4-butanediol, 1889,0g d'acide succinique et 540 g de l'oligocarbonate de l'exemple 2. Le mélange réactionnel est ensuite chauffé à 225°C (4°C/min) sous 2 bars de pression et sous agitation constante (150 tr/min). Le taux d'estérification est estimé à partir de la quantité de distillat collectée. Puis, la pression est réduite à 0,7 mbar et la température amenée à 230°C. Pendant la décompression, 11,586 g de tétra-n-butylate de zirconium sont ajoutés comme catalyseur. Ces conditions de transestérification sont maintenues pendant 350min. Enfin, un jonc de polymère est coulé par la vanne de fond du réacteur, refroidi dans un bac d'eau thermo-régulé et découpé sous forme de granulés d'environ 15 mg.

La masse molaire de ce polymère déterminée en SEC dans le THF est de 24000 g/mol. La température de fusion du polymère est de 108°C, il présente deux transitions vitreuses une à -40°C et l'autre à -28°C, sa température de cristallisation de 55°C et son taux de cristallinité de 23% (données déterminées en DSC). Le polymère est opaque et blanc, ce qui confirme la ségrégation de phases observée par DSC.

Exemple 9 : Synthèse de poly ester-b-carbonate base PET

Dans un réacteur de 7,5L sont ajoutés 682 g d'éthylène glycol, 1600 g d'acide téréphtalique et 720 g de l'oligocarbonate de l'exemple 2. Le mélange réactionnel est ensuite chauffé à 265°C (10°C/min) sous 5 bars de pression et sous agitation constante (150 tr/min). Le taux d'estérification est estimé à partir de la quantité de distillat collectée. Puis, la pression est réduite à 0,7 mbar et la température amenée à 270°C. Pendant la décompression, 8,586 g de tétra-n-butylate de zirconium sont ajoutés comme catalyseur. Ces conditions de transestérification sont maintenues pendant 350min. Enfin, un jonc de polymère est coulé par la vanne de fond du réacteur, refroidi dans un bac d'eau thermo-régulé et découpé sous forme de granulés d'environ 15 mg.

La masse molaire de ce polymère déterminée en SEC dans le THF est de 17900 g/mol. La température de fusion du polymère est de 238°C, il présente deux transitions vitreuses une à -37°C et l'autre à 78°C, sa température de cristallisation de 115°C et son taux de cristallinité de 29% (données déterminées en DSC). Le polymère est opaque et blanc, ce qui confirme la ségrégation de phases observée par DSC.

**Revendications**

**1.** Procédé de fabrication d'un polymère multibloc présentant un bloc polycarbonate comprenant:

- une étape (1) d'introduction, dans un réacteur :
  - d'un monomère de formule (A1):

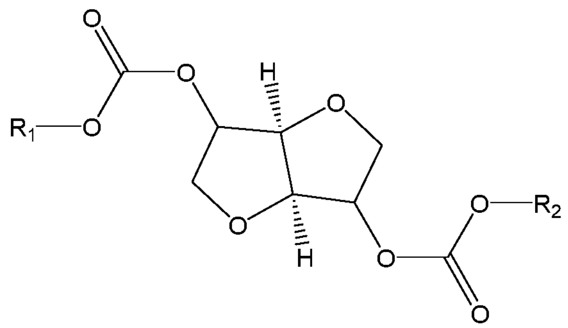

(A1)

dans laquelle $R_1$ et $R_2$ sont des groupements alkyle identiques ou différents,
◦ ou d'un dimère de formule (A2) :

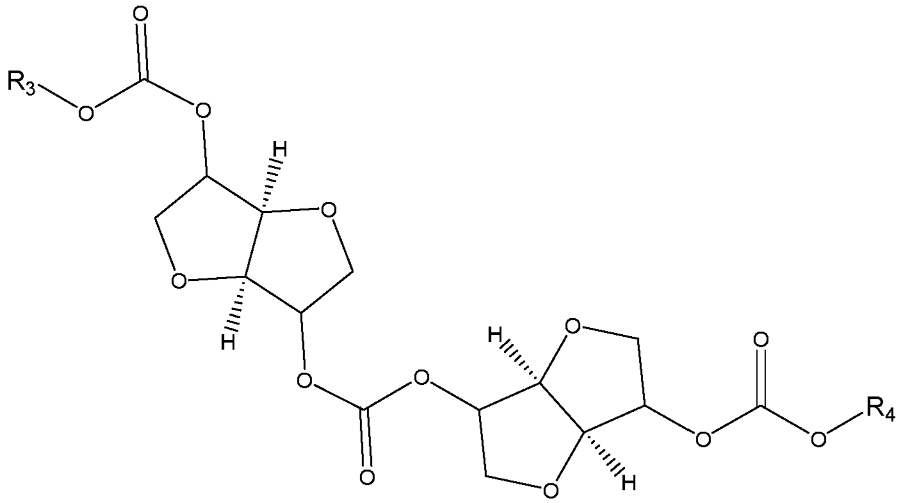

(A2)

dans laquelle $R_3$ et $R_4$ sont des groupements alkyle identiques ou différents,
◦ ou d'un mélange de (A1) et (A2);

- une étape (2) d'introduction, dans le réacteur, d'un monomère diol (B1) ou d'un monomère triol (B2) ou d'un mélange de (B1) et (B2), (B1) et (B2) étant tous deux différents de (A1) et (A2);
- le ratio molaire dans le réacteur de (A1) et (A2) par rapport à (B1) et (B2) répondant à la formule suivante :

$$\frac{[\frac{(A1)}{2}+\frac{(A2)}{2}]/}{[\frac{(B1)}{2}+\frac{(B2)}{3}]}<1$$

- une étape (3) ultérieure de polycondensation par transestérification des monomères et dimères (A1), (A2), (B1) et (B2) pour obtenir un oligocarbonate polyol ayant une masse molaire (Mn) inférieure à 5000 g/mol et au moins deux terminaisons de chaîne de type hydroxyle, dans laquelle la masse molaire est déterminée par chromatographie s'exclusion stérique comme indiqué dans la description.

  - une étape (4) de récupération de l'oligocarbonate polyol.
  - une étape (5) de réaction de l'oligocarbonate polyol avec

  Soit :

◦ un ou plusieurs diacides choisis parmi les diacides aromatiques ou aliphatiques, et avec
◦ un ou plusieurs composés choisis parmi des diols ou des diamines.

Soit

◦ un ou plusieurs oligoéthers diol, et avec
◦ un ou plusieurs agents de couplage.

2. Procédé selon la revendication 1, **caractérisé en ce que** le monomère (A1) est introduit dans le réacteur à l'étape (1) seul ou en mélange avec le dimère (A2).

3. Procédé selon les revendications 1 ou 2, **caractérisé en ce que** ratio molaire dans le réacteur de (A1) et (A2) par rapport à (B1) et (B2) répondant à la formule suivante :

$$\frac{[\frac{(A1)}{2} + \frac{(A2)}{2}]/}{[\frac{(B1)}{2} + \frac{(B2)}{3}]}$$

est strictement inférieur à 1 et supérieur à 0,5, en particulier strictement inférieur à 1 et supérieur à 0,7, plus particulièrement strictement inférieur à 1 et supérieur à 0,9.

4. Procédé selon l'une quelconque des revendications 1 à 3, **caractérisé en ce que** $R_1$, $R_2$, $R_3$ et $R_4$ sont indépendamment choisis parmi les groupements alkyle comprenant de 1 à 10 atomes de carbone, en particulier de 1 à 6 atomes de carbone, plus particulièrement de 1 à 4 atomes de carbone, plus particulièrement les groupements méthyle ou éthyle.

5. Procédé selon l'une quelconque des revendications 1 à 4, **caractérisé en ce que** le monomère (A1) est un dialkylcarbonate d'isosorbide, en particulier un diéthylcarbonate d'isosorbide ou un diméthylcarbonate d'isosorbide.

6. Procédé selon l'une quelconque des revendications 1 à 5, **caractérisé en ce que** le monomère diol (B1) et le monomère triol (B2) sont choisis parmi les diols ou triols aliphatiques, en particulier linéaires ou ramifiés, ou bien les diols ou triols cycliques, aromatiques ou non aromatiques.

7. Procédé selon la revendication 6, **caractérisé en ce que** le diol (B1) est choisi parmi l'éthylène glycol, le 1,3-propanediol, le 1,4-butanediol, le 1,5-pentanediol, le 1,6-hexanediol, le 1,8-octanediol ou le 1,10-decanediol.

8. Procédé selon la revendication 6, **caractérisé en ce que** le diol (B1) est choisi parmi le 1,2-propanediol, le 1,3-butanediol, le 2,3-butanediol, le 1,3-pentanediol, le 1,4-hexanediol, le 2,2-diméthyl-1,3-propanediol, le 3-méthyl-1,5-pentanediol, le 2,2-diméthyl-1,3-propanediol ou le 2-méthyl-1,3-propanediol.

9. Procédé selon la revendication 6, **caractérisé en ce que** le diol (B1) est choisi parmi les diols aliphatiques cycliques suivants:

- les dianhydrohexitols tels que l'isosorbide, l'isomannide et l'isoidide ;
- les cyclohexanediméthanols tels que le 1,2-cyclohexanediméthanol, le 1,3-cyclohexanediméthanol, et le 1,4-cyclohexanediméthanol ;
- les tricyclodécanediméthanols ;
- les pentacyclopentanediméthanols ;
- les décalindiméthanols tels que le 2,6-décalindiméthanol, le 1,5-décalindiméthanol et le 2,3-décalindiméthanol ;
- les norbornanediméthanols tels que le 2,3-norbornanediméthanol et le 2,5-norbornanediméthanol ;
- les adamantanediméthanols tels que le 1,3-adamantanediméthanol ;
- les cyclohexanediols tels que le 1,2-cyclohexanediol, le 1,3-cyclohexanediol et le 1,4-cyclohexanediol ;
- les tricyclodécanediols ;
- les pentacyclopentadecanediols ;
- les décalindiols ;

- les norbornanediols ;
- ou les adamantanediols.

**10.** Procédé selon l'une quelconque des revendications 1 à 9, **caractérisé en ce que** l'étape (3) se fait en présence d'un catalyseur de polycondensation par transestérification, avantageusement un catalyseur comprenant au moins un ion de métal alcalin ou de métal alcalino-terreux, un ion ammonium quaternaire, un ion phosphonium quaternaire, un composé azoté cyclique, un composé basique à base de bore ou un composé basique à base de phosphore.

**11.** Procédé selon l'une quelconque des revendications 1 à 10, **caractérisé en ce que** la quantité molaire de catalyseur par rapport à la quantité du monomère (A1) et du dimère (A2) va avantageusement de $10^{-7}$% à 1% en poids, préférentiellement de $10^{-4}$% à 0,5% en poids.

**12.** Procédé selon l'une quelconque des revendications 1 à 11, **caractérisé en ce que** l'étape (3) est réalisée sous atmosphère inerte, par exemple sous azote.

**13.** Procédé selon l'une quelconque des revendications 1 à 12, **caractérisé en ce qu'**au moins une partie de l'étape (3) est réalisée à une température allant de 100°C à 250°C, préférentiellement de 150°C à 235°C.

**14.** Procédé selon l'une quelconque des revendications 1 à 13, **caractérisé en ce que** ledit un ou plusieurs diols sont choisis parmi : l'éthylène glycol, le 1,4 butane diol, le 1,6 hexane diol, le cyclohexane dimethanol, l'isosorbide et les diacides parmi l'acide téréphtalique, l'acide succinique, l'acide adipique, l'acide naphtalène dicarboxylique, l'acide furanique, l'acide maléique ou l'acide fumarique.

**15.** Procédé selon l'une quelconque des revendications précédentes **caractérisé en ce que** l'étape (5) est une étape de réaction de l'oligocarbonate polyol avec un ou plusieurs diacides choisis parmi les diacides aromatiques ou aliphatiques, et avec un ou plusieurs diol(s), de façon à former un poly (ester-b-carbonate).

**16.** Procédé selon la revendication 15 carcatérisé en ce que ledit un ou plusieurs diol(s) est choisis parmi : l'éthylène glycol, le 1,4 butane diol, le 1,6 hexane diol, le cyclohexane dimethanol, et l'isosorbide.

**17.** Procédé selon la revendication 15 ou 16 **caractérisé en ce que** ledit un ou plusieurs diacide(s) additionnels sont choisis parmi l'acide téréphtalique, l'acide succinique, l'acide adipique, l'acide naphtalène dicarboxylique, l'acide furanique, l'acide maléique et l'acide fumarique.

**18.** Procédé selon l'une quelconque des revendications 1 à 14 **caractérisé en ce que** l'étape (5) est une étape de réaction de l'oligocarbonate polyol avec un ou plusieurs diacides choisis parmi les diacides aromatiques ou aliphatiques, et avec une ou plusieurs diamine(s) de façon à former un poly (amide-b-carbonate).

**19.** Procédé selon la revendication 18 **caractérisé en ce que** ladite une ou plusieurs diamine(s) est choisie parmi le 1,4 diamino butane (putrescine), le 1,5 diamino pentane (cadavérine) , le 1,6 diamino butane (luciférine), l'o-xylylènediamine, la m-xylylènediamine, la p-xylylènediamine, la 4,4'-diaminobiphenyle et la 1,8-diaminonaphtalène.

**20.** Procédé selon la revendication 18 ou 19, **caractérisé en ce que** ledit un ou plusieurs diacide(s) sont choisis parmi l'acide téréphtalique, l'acide succinique, l'acide adipique, l'acide naphtalène dicarboxylique, l'acide furanique, l'acide maléique ou l'acide fumarique.

**21.** Procédé selon l'une quelconque des revendications 1 à 14 **caractérisé en ce que** l'étape (5) est une étape de réaction de l'oligocarbonate polyol avec

- un ou plusieurs oligoéthers diol, et avec
- un ou plusieurs agents de couplage.

de façon à former un poly (éther-*b*-carbonate).

**22.** Procédé selon la revendication 21 **caractérisé en ce que** ledit un ou plusieurs agents de couplage est choisi parmi les composés comprenant deux fonctions isocyanate, isocyanurate, lactame, lactone, carbonate, époxy, oxazoline ou imide, lesdites fonctions pouvant être identiques ou différentes.

**23.** Procédé selon la revendication 22, **caractérisé en ce que** l'agent de couplage est un diisocyanate ou un composé présentant deux fonctions epoxy

**24.** Procédé selon l'une quelconque des revendications 21 à 23 **caractérisé en ce que** l'oligoether diol est choisi parmi un poly oxyde d'éthylène hydroxytéléchélique, un poly oxyde de propylène hydroxytéléchélique, un poly oxyde de butylène hydroxytéléchélique, un oligoéther fluoré ou perfluoré hydroxytéléchélique et un oligo ether chlorofluoré hydroxytéléchélique.

**25.** Polymère multibloc présentant un bloc polycarbonate susceptible d'être obtenu par le procédé selon l'une quelconque des revendications 1 à 24.

**26.** Polymère selon la revendication 25, **caractérisé en ce qu'**il comprend un taux de phénol inférieur à 50 ppb.

**27.** Polymère selon la revendication 25 ou 26 **caractérisé en ce qu'**ils présentent une ségrégation de phase.

## Patentansprüche

**1.** Verfahren zur Herstellung eines Multiblockpolymers mit einem Polycarbonatblock, umfassend:

- einen Schritt (1) des Einbringens in einen Reaktor:
  - eines Monomers der Formel (A1):

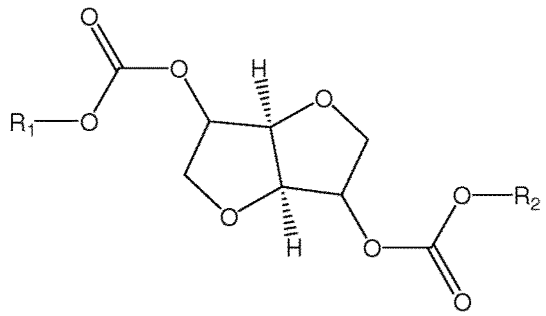

(A1)

worin $R_1$ und $R_2$ gleiche oder unterschiedliche Alkylgruppen sind,
  - oder eines Dimers der Formel (A2):

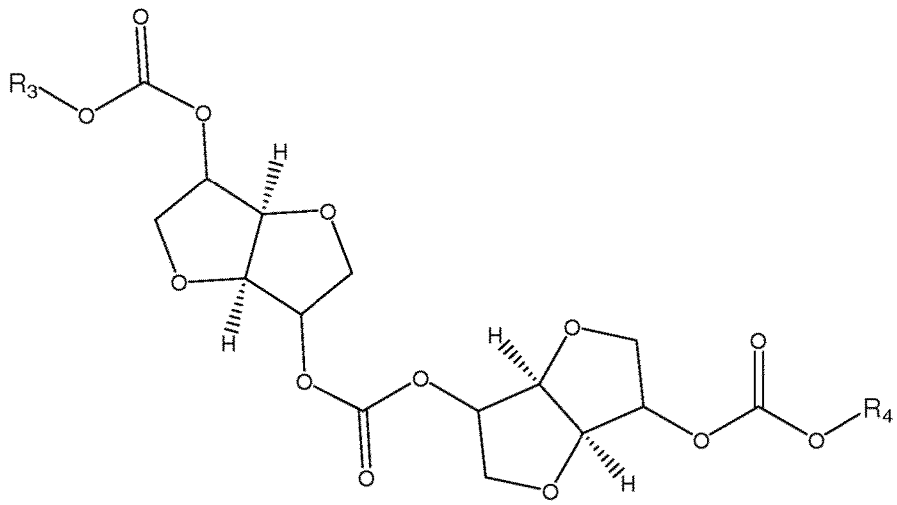

(A2)

worin $R_3$ und $R_4$ gleiche oder unterschiedliche Alkylgruppen sind,
◦ oder eines Gemischs von (A1) und (A2);

- einen Schritt (2) des Einbringens eines Diolmonomers (B1) oder eines Triolmonomers (B2) oder eines Gemischs aus (B1) und (B2) in den Reaktor, wobei (B1) und (B2) beide von (A1) und (A2) verschieden sind;
- wobei das Molverhältnis von (A1) und (A2) in Bezug auf (B1) und (B2) im Reaktor die folgende Formel erfüllt:

$$\frac{[\frac{(A1)}{2} + \frac{(A2)}{2}]/}{[\frac{(B1)}{2} + \frac{(B2)}{3}]} < 1$$

- einen anschließenden Polykondensationsschritt (3) durch Umesterung der Monomere und Dimere (A1), (A2), (B1) und (B2), um ein Oligocarbonatpolyol mit einer Molmasse (Mn) von weniger als 5000 g/mol und mindestens zwei Kettenabschlüssen vom Typ Hydroxyl zu erhalten, wobei die Molmasse durch sterische Ausschlusschromatographie wie in der Beschreibung angegeben bestimmt wird,
- einen Schritt (4) der Gewinnung des Oligocarbonatpolyols,
- einen Schritt (5) der Umsetzung des Oligocarbonatpolyols mit entweder:

  ◦ einer oder mehreren Disäuren, ausgewählt aus aromatischen oder aliphatischen Disäuren, und mit
  ◦ einer oder mehrere Verbindungen, ausgewählt aus Diolen oder Diaminen,

oder

  ◦ einem oder mehreren Oligoetherdiolen, und mit
  ◦ einem oder mehreren Kopplungsmitteln.

2. Verfahren nach Anspruch 1, **dadurch gekennzeichnet, dass** das Monomer (A1) in Schritt (1) allein oder im Gemisch mit dem Dimer (A2) in den Reaktor eingebracht wird.

3. Verfahren nach Anspruch 1 oder 2, **dadurch gekennzeichnet, dass** das Molverhältnis von (A1) und (A2) in Bezug auf (B1) und (B2) im Reaktor die folgende Formel erfüllt:

$$\frac{[\frac{(A1)}{2} + \frac{(A2)}{2}]/}{[\frac{(B1)}{2} + \frac{(B2)}{3}]}$$

ist streng kleiner als 1 und größer als 0,5, insbesondere streng kleiner als 1 und größer als 0,7, noch spezieller streng kleiner als 1 und größer als 0,9.

4. Verfahren nach einem der Ansprüche 1 bis 3, **dadurch gekennzeichnet, dass** $R_1$, $R_2$, $R_3$ und $R_4$ unabhängig voneinander ausgewählt sind aus Alkylgruppen mit 1 bis 10 Kohlenstoffatomen, insbesondere 1 bis 6 Kohlenstoffatomen, noch spezieller 1 bis 4 Kohlenstoffatomen, noch spezieller Methyl- oder Ethylgruppen.

5. Verfahren nach einem der Ansprüche 1 bis 4, **dadurch gekennzeichnet, dass** das Monomer (A1) ein Isosorbiddialkylcarbonat ist, insbesondere ein Isosorbiddiethylcarbonat oder ein Isosorbiddimethylcarbonat.

6. Verfahren nach einem der Ansprüche 1 bis 5, **dadurch gekennzeichnet, dass** das Diolmonomer (B1) und das Triolmonomer (B2) ausgewählt sind aus aliphatischen, insbesondere linearen oder verzweigten Diolen oder Triolen oder aus cyclischen, aromatischen oder nichtaromatischen Diolen oder Triolen.

7. Verfahren nach Anspruch 6, **dadurch gekennzeichnet, dass** das Diol (B1) ausgewählt ist aus Ethylenglykol, 1,3-Propandiol, 1,4-Butandiol, 1,5-Pentandiol, 1,6-Hexandiol, 1,8-Octandiol oder 1,10-Decandiol.

8. Verfahren nach Anspruch 6, **dadurch gekennzeichnet, dass** das Diol (B1) ausgewählt ist aus 1,2-Propandiol, 1,3-Butandiol, 2,3-Butandiol, 1,3-Pentandiol, 1,4-Hexandiol, 2,2-Dimethyl-1,3-propandiol, 3-Methyl-1,5-pentandiol, 2,2-Dimethyl-1,3-propandiol oder 2-Methyl-1,3-propandiol.

9. Verfahren nach Anspruch 6, **dadurch gekennzeichnet, dass** das Diol (B1) aus den folgenden cyclischen aliphatischen Diolen ausgewählt ist:

- Dianhydrohexitole wie Isosorbid, Isomannid und Isoidid ;
- Cyclohexandimethanole wie 1,2-Cyclohexandimethanol, 1,3-Cyclohexandimethanol und 1,4-Cyclohexandimethanol;
- Tricyclodecandimethanole;
- Pentacyclopentandimethanole;
- Decalindimethanole wie 2,6-Decalindimethanol, 1,5-Decalindimethanol und 2,3-Decalindimethanol;
- Norbornandimethanole wie 2,3-Norbornandimethanol und 2,5-Norbornandimethanol;
- Adamantandimethanole wie 1,3-Adamantandimethanol;
- Cyclohexandiole wie 1,2-Cyclohexandiol, 1,3-Cyclohexandiol und 1,4-Cyclohexandiol;
- Tricyclodecandiole;
- Pentacyclopentadecandiole;
- Decalindiole;
- Norbornandiole;
- oder Adamantandiole.

10. Verfahren nach einem der Ansprüche 1 bis 9, **dadurch gekennzeichnet, dass** Schritt (3) in Gegenwart eines Polykondensationskatalysators durch Umesterung durchgeführt wird, vorteilhafterweise eines Katalysators, der mindestens ein Alkali- oder Erdalkalimetallion, ein quaternäres Ammoniumion, ein quaternäres Phosphoniumion, eine cyclische Stickstoffverbindung, eine basische Verbindung auf Borbasis oder eine basische Verbindung auf Phosphorbasis umfasst

11. Verfahren nach einem der Ansprüche 1 bis 10, **dadurch gekennzeichnet, dass** die molare Menge an Katalysator, bezogen auf die Menge an Monomer (A1) und Dimer (A2) vorteilhafterweise $10^{-7}$ bis 1 Gew.-%, vorzugsweise $10^{-4}$ bis 0,5 Gew.-% beträgt.

12. Verfahren nach einem der Ansprüche 1 bis 11, **dadurch gekennzeichnet, dass** Schritt (3) unter einer inerten Atmosphäre, zum Beispiel unter Stickstoff, durchgeführt wird.

13. Verfahren nach einem der Ansprüche 1 bis 12, **dadurch gekennzeichnet, dass** zumindest ein Teil von Schritt (3) bei einer Temperatur im Bereich von 100°C bis 250°C, vorzugsweise von 150°C bis 235°C, durchgeführt wird.

14. Verfahren nach einem der Ansprüche 1 bis 13, **dadurch gekennzeichnet, dass** das eine oder die mehreren Diole ausgewählt sind aus: Ethylenglykol, 1,4-Butandiol, 1,6-Hexandiol, Cyclohexandimethanol, Isosorbid und Disäuren der Terephthalsäure, Bernsteinsäure, Adipinsäure, Naphthalindicarbonsäure, Furansäure, Maleinsäure oder Fumarsäure.

15. Verfahren nach einem der vorhergehenden Ansprüche, **dadurch gekennzeichnet, dass** Schritt (5) ein Schritt der Umsetzung des Oligocarbonatpolyols mit einer oder mehreren Disäuren, ausgewählt aus aromatischen oder aliphatischen Disäuren, und mit einem oder mehreren Diol(en) ist, so dass ein Poly(ester-*b*-carbonat) gebildet wird.

16. Verfahren nach Anspruch 15, **dadurch gekennzeichnet, dass** das eine oder die mehreren Diol(e) ausgewählt ist (sind) aus: Ethylenglykol, 1,4-Butandiol, 1,6-Hexandiol, Cyclohexandimethanol und Isosorbid.

17. Verfahren nach Anspruch 15 oder 16, **dadurch gekennzeichnet, dass** die eine oder die mehreren zusätzliche(n) Disäure(n) ausgewählt ist (sind) aus: Terephthalsäure, Bernsteinsäure, Adipinsäure, Naphthalindicarbonsäure, Furansäure, Maleinsäure und Fumarsäure.

18. Verfahren nach einem der Ansprüche 1 bis 14, **dadurch gekennzeichnet, dass** Schritt (5) ein Schritt der Umsetzung des Oligocarbonatpolyols mit einer oder mehreren Disäuren, ausgewählt aus aromatischen oder aliphatischen Disäuren, und mit einem oder mehreren Diamin(en) ist, um ein Poly(amid-*b*-carbonat) zu bilden.

**19.** Verfahren nach Anspruch 18, **dadurch gekennzeichnet, dass** das eine oder die mehreren Diamin(e) ausgewählt ist (sind) aus 1,4-Diaminobutan (Putrescin), 1,5-Diaminopentan (Cadaverin), 1,6-Diaminobutan (Luciferin), o-Xylylendiamin, m-Xylylendiamin, p-Xylylendiamin, 4,4'-Diaminobiphenyl und 1,8-Diaminonaphthalin.

**20.** Verfahren nach Anspruch 18 oder 19, **dadurch gekennzeichnet, dass** die eine oder die mehreren Disäure(n) ausgewählt ist (sind) aus Terephthalsäure, Bernsteinsäure, Adipinsäure, Naphthalindicarbonsäure, Furansäure, Maleinsäure oder Fumarsäure.

**21.** Verfahren nach einem der Ansprüche 1 bis 14, **dadurch gekennzeichnet, dass** es sich bei Schritt (5) um einen Schritt der Umsetzung des Oligocarbonatpolyols mit

◦ einem oder mehreren Oligoetherdiolen, und mit
◦ einem oder mehreren Kopplungsmitteln

handelt, so dass ein Poly(ether-*b*-carbonat) gebildet wird.

**22.** Verfahren nach Anspruch 21, **dadurch gekennzeichnet, dass** der eine oder die mehreren Kopplungsmittel ausgewählt ist (sind) aus Verbindungen, die zwei Isocyanat-, Isocyanurat-, Lactam-, Lacton-, Carbonat-, Epoxy-, Oxazolin- oder Imidfunktionen umfassen, wobei diese Funktionen gleich oder unterschiedlich sein können.

**23.** Verfahren nach Anspruch 22, **dadurch gekennzeichnet, dass** das Kopplungsmittel ein Diisocyanat oder eine Verbindung mit zwei Epoxyfunktionen ist.

**24.** Verfahren nach einem der Ansprüche 21 bis 23, **dadurch gekennzeichnet, dass** das Oligoetherdiol ausgewählt ist aus einem hydroxytelechelen Polyethylenoxid, einem hydroxytelechelen Polypropylenoxid, einem hydroxytelechelen Polybutylenoxid, einem hydroxytelechelen fluorierten oder perfluorierten Oligoether und einem hydroxytelechelen chlorfluorierten Oligoether.

**25.** Multiblockpolymer mit einem Polycarbonatblock, erhältlich nach dem Verfahren nach einem der Ansprüche 1 bis 24.

**26.** Polymer nach Anspruch 25, **dadurch gekennzeichnet, dass** es einen Phenolgehalt von weniger als 50 ppb aufweist.

**27.** Polymer nach Anspruch 25 oder 26, **dadurch gekennzeichnet, dass** es eine Phasentrennung aufweist.

## Claims

**1.** Process for manufacturing a multiblock polymer having a polycarbonate block comprising:

▪ a step (1) of introducing, into a reactor:

◦ a monomer of formula (A1):

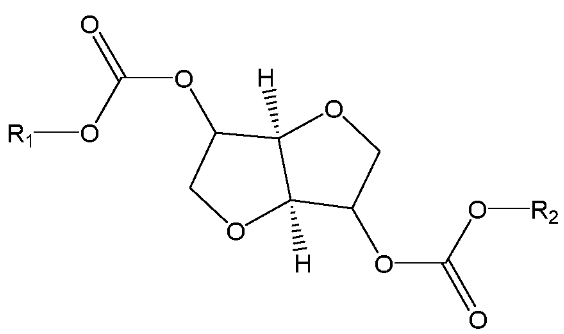

(A1)

in which $R_1$ and $R_2$ are identical or different alkyl groups,
◦ or a dimer of formula (A2):

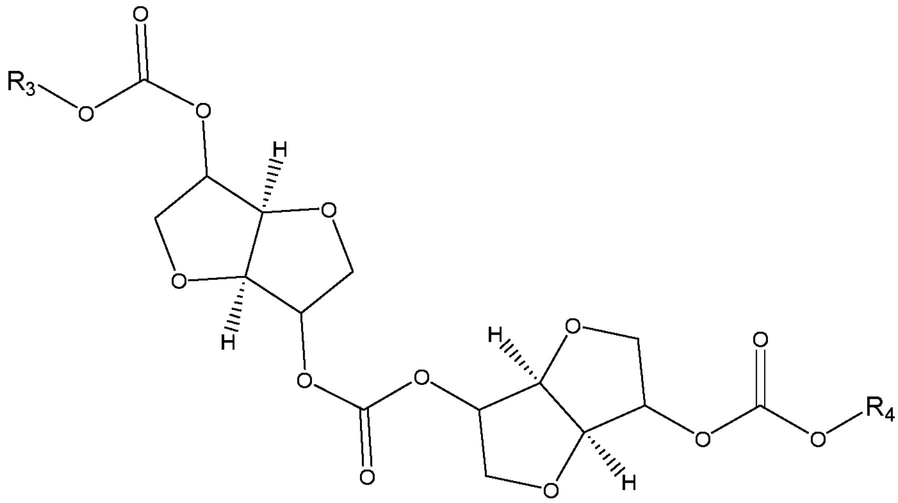

(A2)

in which $R_3$ and $R_4$ are identical or different alkyl groups,

◦ or a mixture of (A1) and (A2);

- a step (2) of introducing, into the reactor, a diol monomer (B1) or a triol monomer (B2) or a mixture of (B1) and (B2), (B1) and (B2) both being different from (A1) and (A2);
- the mole ratio in the reactor of (A1) and (A2) relative to (B1) and (B2) corresponding to the following formula:

$$\frac{[\frac{(A1)}{2} + \frac{(A2)}{2}]/}{[\frac{(B1)}{2} + \frac{(B2)}{3}]} < 1$$

,

- a subsequent step (3) of polycondensation by transesterification of the monomers and dimers (A1), (A2), (B1) and (B2) to obtain an oligocarbonate polyol with a molar mass ($M_n$) of less than 5000 g/mol and at least two chain end groups of hydroxyl type, in which the molar mass is determined by size exclusion chromatography as indicated in the description,
- a step (4) of recovering the oligocarbonate polyol,
- a step (5) of reacting the oligocarbonate polyol with

either:

◦ one or more diacids chosen from aromatic or aliphatic diacids, and with
◦ one or more compounds chosen from diols or diamines,

or:

◦ one or more oligoether diols, and with
◦ one or more coupling agents.

2. Process according to Claim 1, **characterized in that** the monomer (A1) is introduced into the reactor in step (1) alone or as a mixture with the dimer (A2).

3. Process according to Claim 1 or 2, **characterized in that** the mole ratio in the reactor of (A1) and (A2) relative to (B1) and (B2) corresponding to the following formula:

$$\frac{[\frac{(A1)}{2} + \frac{(A2)}{2}]/}{[\frac{(B1)}{2} + \frac{(B2)}{3}]}$$

is strictly less than 1 and greater than 0.5, in particular strictly less than 1 and greater than 0.7, more particularly strictly less than 1 and greater than 0.9.

**4.** Process according to any one of Claims 1 to 3, **characterized in that** $R_1$, $R_2$, $R_3$ and $R_4$ are chosen independently from alkyl groups comprising from 1 to 10 carbon atoms, in particular from 1 to 6 carbon atoms, more particularly from 1 to 4 carbon atoms, more particularly methyl or ethyl groups.

**5.** Process according to any one of Claims 1 to 4, **characterized in that** the monomer (A1) is an isosorbide bis(alkyl carbonate), in particular an isosorbide bis(ethyl carbonate) or an isosorbide bis(methyl carbonate).

**6.** Process according to any one of Claims 1 to 5, **characterized in that** the diol monomer (B1) and the triol monomer (B2) are chosen from aliphatic diols or triols, which are in particular linear or branched, or else cyclic, aromatic or nonaromatic diols or triols.

**7.** Process according to Claim 6, **characterized in that** the diol (B1) is chosen from ethylene glycol, 1,3-propanediol, 1,4-butanediol, 1,5-pentanediol, 1,6-hexanediol, 1,8-octanediol and 1,10-decanediol.

**8.** Process according to Claim 6, **characterized in that** that the diol (B1) is chosen from 1,2-propanediol, 1,3-butanediol, 2,3-butanediol, 1,3-pentanediol, 1,4-hexanediol, 2,2-dimethyl-1,3-propanediol, 3-methyl-1,5-pentanediol, 2,2-dimethyl-1,3-propanediol or 2-methyl-1,3-propanediol.

**9.** Process according to Claim 6, **characterized in that** the diol (B1) is chosen from the following cyclic aliphatic diols:

- dianhydrohexitols such as isosorbide, isomannide and isoidide;
- cyclohexanedimethanols such as 1,2-cyclohexanedimethanol, 1,3-cyclohexanedimethanol and 1,4-cyclohexanedimethanol;
- tricyclodecanedimethanols;
- pentacyclopentanedimethanols;
- decalindimethanols such as 2,6-decalindimethanol, 1,5-decalindimethanol and 2,3-decalindimethanol;
- norbornanedimethanols such as 2,3-norbornanedimethanol and 2,5-norbornanedimethanol;
- adamantanedimethanols such as 1,3-adamantanedimethanol;
- cyclohexanediols such as 1,2-cyclohexanediol, 1,3-cyclohexanediol and 1,4-cyclohexanediol;
- tricyclodecanediols;
- pentacyclopentadecanediols;
- decalindiols;
- norbornanediols;
- or adamantanediols.

**10.** Process according to any one of Claims 1 to 9, **characterized in that** step (3) takes place in the presence of a catalyst for polycondensation by transesterification, advantageously a catalyst comprising at least one alkali metal or alkaline-earth metal ion, a quaternary ammonium ion, a quaternary phosphonium ion, a cyclic nitrogenous compound, a basic boron-based compound or a basic phosphorus-based compound.

**11.** Process according to any one of Claims 1 to 10, **characterized in that** the molar amount of catalyst relative to the amount of the monomer (A1) and of the dimer (A2) advantageously ranges from $10^{-7}$% to 1% by weight, preferentially from $10^{-4}$% to 0.5% by weight.

**12.** Process according to any one of Claims 1 to 11, **characterized in that** step (3) is performed under an inert atmosphere, for example under nitrogen.

**13.** Process according to any one of Claims 1 to 12, **characterized in that** at least part of step (3) is performed at a temperature ranging from 100°C to 250°C, preferentially from 150°C to 235°C.

**14.** Process according to any one of Claims 1 to 13, **characterized in that** said one or more diols are chosen from: ethylene glycol, 1,4-butanediol, 1,6-hexanediol, cyclohexanedimethanol, isosorbide and diacids from among terephthalic acid, succinic acid, adipic acid, naphthalenedicarboxylic acid, furanic acid, maleic acid or fumaric acid.

**15.** Process according to any one of the preceding claims, **characterized in that** step (5) is a step of reacting the oligocarbonate polyol with one or more diacids chosen from aromatic or aliphatic diacids, and with one or more diol(s), so as to form a poly(ester-*b*-carbonate) .

**16.** Process according to Claim 15, **characterized in that** said one or more diol(s) is chosen from: ethylene glycol, 1,4-butanediol, 1,6-hexanediol, cyclohexanedimethanol, and isosorbide.

**17.** Process according to Claims 15 or 16, **characterized in that** said one or more additional diacid(s) are chosen from terephthalic acid, succinic acid, adipic acid, naphthalenedicarboxylic acid, furanic acid, maleic acid and fumaric acid.

**18.** Process according to any one of Claims 1 to 14, **characterized in that** step (5) is a step of reacting the oligocarbonate polyol with one or more diacids chosen from aromatic or aliphatic diacids, and with one or more diamine(s) so as to form a poly(amide-*b*-carbonate).

**19.** Process according to Claim 18, **characterized in that** said one or more diamine(s) is chosen from 1,4-diaminobutane (putrescine), 1,5-diaminopentane (cadaverine), 1,6-diaminobutane (luciferin), o-xylylenediamine, m-xylylenediamine, p-xylylenediamine, 4,4'-diaminobiphenyl and 1,8-diaminonaphthalene.

**20.** Process according to Claim 18 or 19, **characterized in that** said one or more diacid(s) are chosen from terephthalic acid, succinic acid, adipic acid, naphthalenedicarboxylic acid, furanic acid, maleic acid or fumaric acid.

**21.** Process according to any one of Claims 1 to 14, **characterized in that** step (5) is a step of reacting the oligocarbonate polyol with:

- one or more oligoether diols, and with
- one or more coupling agents,

so as to form a poly(ether-*b*-carbonate).

**22.** Process according to Claim 21, **characterized in that** said one or more coupling agents is chosen from compounds comprising two isocyanate, isocyanurate, lactam, lactone, carbonate, epoxy, oxazoline or imide functions, it being possible for said functions to be identical or different.

**23.** Process according to Claim 22, **characterized in that** the coupling agent is a diisocyanate or a compound having two epoxy functions.

**24.** Process according to any one of Claims 21 to 23, **characterized in that** the oligoether diol is chosen from a hydroxytelechelic polyethylene oxide, a hydroxytelechelic polypropylene oxide, a hydroxytelechelic polybutylene oxide, a hydroxytelechelic fluorinated or perfluorinated oligoether and a hydroxytelechelic chlorofluoro oligoether.

**25.** Multiblock polymer having a polycarbonate block capable of being obtained via the process according to any one of Claims 1 to 24.

**26.** Polymer according to Claim 25, **characterized in that** it comprises a phenol content of less than 50 ppb.

**27.** Polymer according to Claim 25 or 26, **characterized in that** they have a phase segregation.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2015026613 A
- US 2005065360 A
- JP 2014062202 A
- JP 2014080590 A
- EP 2559718 A
- WO 2011039483 A
- EP 2033981 A
- US 2004241553 A
- JP 6261774 A
- EP 2840102 A
- WO 2012136942 A